# EUROPEAN PATENT SPECIFICATION

(11) **EP 1 293 334 B1**
(45) Date of publication and mention of the grant of the patent: **10.11.2004**
(21) Application number: 01929665.6
(22) Date of filing: 09.05.2001
(51) Int. Cl.: B29D 31/00, B29D 7/00, B29C 45/02, B29C 59/02

(54) **NONSLIP THERMOPLASTIC PART AND METHOD FOR THE PRODUCTION THEREOF**
RUTSCHFESTES THERMOPLASTISCHES KUNSTSTOFFTEIL UND VERFAHREN ZU SEINER HERSTELLUNG
PIECE ANTIDERAPANTE THERMOPLASTIQUE ET SON PROCEDE DE PRODUCTION

(30) Priority: 09.05.2000 ES 200001238 U
(43) Date of publication of application: 19.03.2003
(73) Proprietor: Algotop S.L., 28013 Madrid (ES)
(72) Inventor: PEREZ CARBALLO, Alfonso, E-28010 Madrid (ES)
(74) Representative: Primo de Rivera y Urquijo, Jose Antonio
(86) International application number: PCT/ES2001/000180
(87) International publication number: WO 2001/087581

(56) References cited:
- WO-A-83/03528
- US-A- 4 889 478
- PATENT ABSTRACTS OF JAPAN & JP 10 219 953 A (TAKIRON CO. LTD) 18 August 1998
- PATENT ABSTRACTS OF JAPAN & JP 10 152 654 A (KOSHIN GOMME KK) 09 June 1998
- PATENT ABSTRACTS OF JAPAN & JP 08 081 616 A (DAICEL CHEM IND LTD) 26 March 1996
- PATENT ABSTRACTS OF JAPAN & JP 54 127 750 A (ASIX-N) 03 October 1979
- PATENT ABSTRACTS OF JAPAN & JP 08 215 131 A (KURARAY PLAST KK) 27 August 1996
- PATENT ABSTRACTS OF JAPAN & JP 04 090 309 A (HITACHI CHEM CO LTD) 24 March 1992

## Description

### Object of the invention

The present invention relates to a non-slipping piece of thermoplastic elastomer (TPE), which can be used as a label, publicity support or similar, which provides essential features of novelty and remarkable advantages with respect to the means known and used for the same ends in the current state of the art, as well as to an injection moulding method to produce it.

The field of the invention is comprised between the industrial field dedicated to the manufacture of pieces with application in injection moulding techniques in general and plastic injection in particular.

### Background of the invention

Currently, there are known thermoplastic elastomers (TPEs) that present great advantage resulting from their non-slip characteristics. However, these non-slip characteristics are reduced or eliminated when the surface of said material receives any type of labelling **(silkscreen marking, tampography,** etc.) or laminar accessory (sticker or similar), so that its use as a label, publicity support or similar is made more difficult to a certain extent.

Japanese patent application number Document JP-A-10152654 describes a tape to be stuck to a slippery surface to prevent sliding. This tape is prepared by mixing 100 pts.wt. natural rubber, synthetic rubber or blend of the both with 25-500 pts.wt. watersoluble crystalline substance (e.g. sodium chloride) having a melting point of 180 deg.C or above and laminating a porous elastomer layer formed by immersing a vulcanizate of the above mixture in water with a pressure-sensitive adhesive layer. When this tape is stuck to the slippery surface of an article, the article is prevented from sliding. For example, the tape is stuck to that surface of buckboards on the washing place of a bathroom which is in contact with the floor, whereupon the duckboards can be prevented from sliding when a man steps onto them when the floor is wet. The duckboards can be easily moved and put away because the boards are not bonded to the floor. When this tape is stuck to outdoor places which become slippery when wetted, such as the front of an entrance hall or outdoor steps, the places can be made proof against sliding.

On the other hand, and as is well known in general, the current moulding techniques allow pieces to be obtained whose shape corresponds practically to any desired configuration and with the use of a wide diversity of materials, with conforming devices known as moulds.

Nevertheless, these techniques encounter diverse difficulties with certain combinations of moulding method, material to be moulded and the shape of the piece to be obtained, fundamentally derived from the physical characteristics of the material in question.

In fact, the current state of the art highlights these problems when it is desired to confer on a thermoplastic piece suitable features to allow it to be used as a label, due mainly to its high anisotropic character that may lead to distortion or deterioration of the printing, or desynchronisation of the colours.

### Summary of the invention

In the case of the present invention, the development of a piece of a specific type of plastic material is proposed, the body being simple, of small dimensions and little thickness, generally flat and obtained with a wide lowered central portion that is used for the provision of ornamentation (either as serigraphic labelling or by the application of a laminar accessory such as a label or similar, as well as the use of an injection method of certain characteristics for its production. Thus, the structure of the piece, the characteristics of the employed material and the form of injection chosen, transfer to the finished piece some properties that allow the aforementioned ornamentation and which provide a non-slipping character which makes it particularly appropriate for use as a label or publicity support stuck to certain types of object, as will be disclosed in greater detail below.

In particular, a first object of the invention consists specifically of a piece moulded with the use of an appropriate material, with preference for the known material SANTOPRENE®, or alternatively EVOPRENE® (a thermoplastic elastomer, in particular, a homopolymer with polypropylene load and rubber, or any other one that is able to provide the piece with the desired features of non-slippage, with a hardness of 35 Shore A and so that the piece is of reduced dimensions, but in particular of a thickness that preferably is in the range of 1 mm to 1.5 mm. The piece is generally flat and presents a smooth face, while on the opposite face there is a raised perimeter border, and on the interior part of this border a central portion, lowered with respect to the aforementioned border, this central portion to be used to receive the corresponding ornamentation.

In accordance with the type of material used, the final piece obtained has, as has already been mentioned, non-slipping features that are maintained even on applying the desired ornamentation, thanks to the particular shape of the piece that the aforementioned sector of a certain depth in relation to the surrounding projection has in the interior zone of one of its faces.

Therefore, a second object of the present invention is a moulding method by submarine injection or submarine gate moulding, without use of a roller, through the posterior central part of each impression of the mould, which makes possible the formation of the already defined thermoplastic part with the appropriate features for its use as a label or publicity support for use with certain surface ornamentation, which consists of the following stages:
- closing the injection machine press with a force of approximately 45-55 x 10⁴ N with moulds of eight impressions in its interior,
- introducing the thermoplastic material into the screw device in the form of pellets through a respective feed hopper at a rate of 24-26 g of load per cycle, with the desired coloration material,
- heating the cylinder of the screw device to approximately 180-230° C to produce the fusion of the material introduced,
- rotating the screw device at a high rate of 280-330 rpm, with a low counter-pressure of 0-20 bars to carry out the introduction of the material into the press of the injection machine at a flow of 170-190 cm³/sec until filling up the corresponding moulds with a load of 1.3-1.6 g/impression,
- leaving the material introduced into the press to cool for 6-9 sec, as a result of the cooling action of the fluid (mainly water) circulating through the interior of the press at 6-10° C, with a flow of 30-40 L/hour,
- opening the press and subsequently the moulds in its interior, and actuating the ejectors in combination with impeller means found in the base of the impression to carry down the pieces by gravity to a corresponding collection hopper, and
- expelling the cold casting pieces.

In this sense, the injection developed is submarine, through the central posterior part of the piece, as a result of the aforementioned anisotropic character of the material, as with a capillary injection the material does not solidify uniformly on cooling and internal forces are created causing creases in the piece and a deterioration in the subsequent ornamentation. Similarly, the method of the invention is carried out using an injection press without rollers with the aim of minimising the possibility of introducing residues of slipping fluid on the pieces which may deteriorate the desired non-slipping features of the piece.

As an additional aspect of the method described above, the final stage is included of applying a layer of adherent material or a double-faced adherent lamina to the smooth face of the piece, along with a detachable protective sheet.

The parameters must be appropriately selected with the aim of preventing the injected pieces from presenting injection defects, such as those known as "shrinkage cracks" or similar defects, and which consist of inappropriate contractions due to unsuitable cooling of the piece.

As can be understood, the characteristics summarised above both for the material and for the mould correspond only to a preferred embodiment and therefore they should not be understood as an exclusive embodiment. In effect, both the materials and the form of construction of the mould could be modified, changed and/or replaced by others that assure that pieces are obtained with the properties of surface finish (soft to the touch) and desired non-slip for the piece of the invention.

### Brief description of the Drawings

These and other features and advantages of the invention will be more clearly shown in the following detailed description of a preferred embodiment, given only by way of illustrative example and in no way limiting, with reference to the drawings enclosed with this specification, in which:
Figure 1 shows schematic plan views, side elevation and longitudinal section views of a piece constructed according to the invention,
Figure 2 illustrates a schematic plan view of a particular type of mould that could serve as example for its use in the moulding of a piece of the present invention,
Figure 3 is a block diagram that represents the method of the present invention, developed graphically in correspondence with the corresponding parts of an injection machine represented as a schematic side elevation view.

### Description of a preferred embodiment

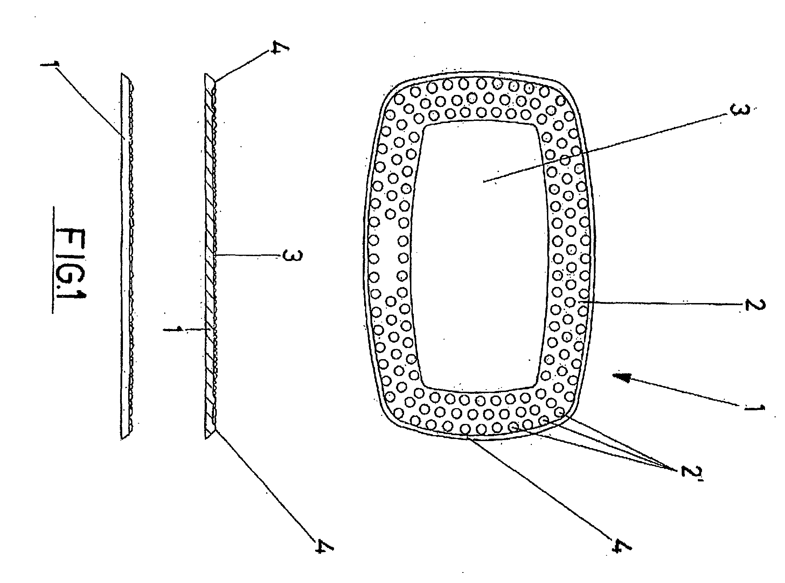

According to an aspect of the present invention, in accordance with that presented in the above, Figure 1 of the Drawings shows several views of the piece of the invention, on the basis of which the detailed description thereof will be made.

Thus, examining said drawings, it can be seen that the piece that has been indicated with the numerical reference 1 has a base form that is essentially rectangular, preferably around 50 mm by 30 mm, more preferably 47.8 mm by 31 mm, with all sides slightly arched with convexity towards the exterior and with rounded vertices, with a flattened transversal section with very little thickness, preferably of between 1 mm and 1.5 mm, more preferably of 1.4 mm, and bevelled edge 4, preferably with an angle of between 35 and 40 degrees, more preferably of 37 degrees, which produces a larger, smooth, face and a smaller face, in which the formation of a perimeter border 2 can be seen with a uniform thickness, formed by a plurality of elevations 2', uniformly distributed through the surface of said border 2 and whose height is very small, preferably between 0.2 and 0.5 mm, more preferably around 0.4 mm, which completely surrounds the piece, and through the interior of which a central surface zone 3 is observed, slightly lowered with respect to the upper level of the elevations 2', preferably around 0.4 mm, more preferably still up to the level of the base of the elevations 2'. Thus, the aforementioned central surface zone 3 constitutes a particularly useful space for the arrangement of any ornamentation (labelling or laminar accessory) since if it were at the same level as the rest of the surface of the piece, the provision of ornamentation would cause the piece to lose its non-slipping properties in said zone, and this would notably reduce its non-slipping properties, which would not be advisable for the foreseen applications.

With specific reference to that seen in the plan view of Figure 1, the uniform distribution of the elevations 2' within the perimeter border 2 can be appreciated, as can the central space 3 defined by them. The number of elevations and their dimensions produce a surface of application of preferably at least 30% with relation to the total plan surface of the piece, more preferably of 35%.

Now especially in accordance with the central longitudinal section and side elevation views, respectively, appearing in this same Figure 1, the small thickness of the piece is perfectly visible as well as the edge 4, bevelled towards the shaped face of the piece, and the border 2 formed by the elevations 2', elevated with respect to the surface central zone 3.

This reduced thickness feature allows the piece to be adhered to certain objects, without obstructing or hindering normal handling thereof. An example of application are mobile telephone terminals in which the piece of the invention can be stuck without making difficult the introduction of the terminal into the corresponding charger and/or other accessories. Other examples include calculators, electronic diaries and, in general, any electronic device.

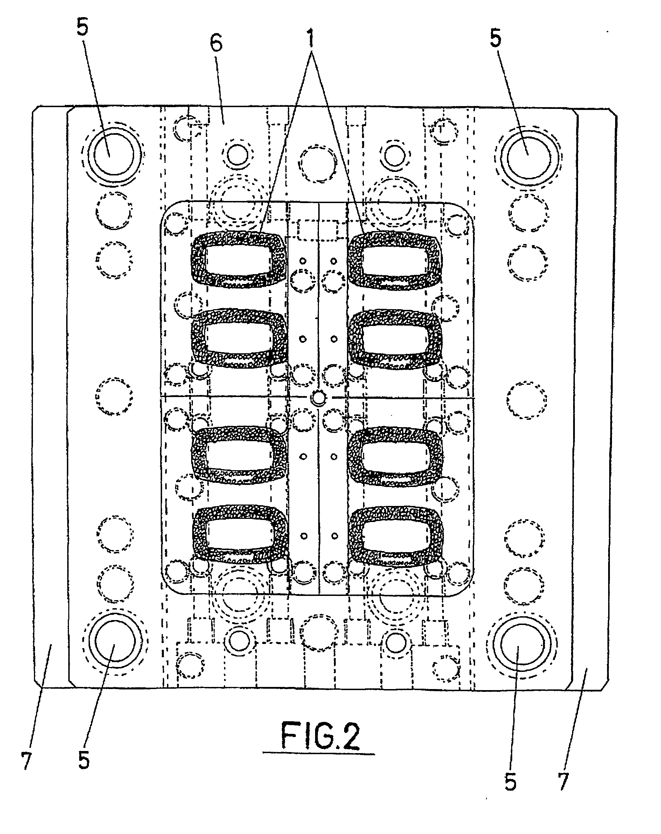

Figure 2 shows a plan view of an example of a mould usable for the formation of pieces of the invention, showing only the part of the mould supporting the impressions or cavities. In this case, as a preferred embodiment but not an exclusive one, the mould of eight positions has been represented, therefore enabled for simultaneous injection of eight pieces 1, identical to each other, of 1.5 g of load per impression. The cavities or impressions occupy symmetrical positions with respect to the two axes, and the troughs are not appreciable since they are of the type submerged in the posterior central part of each impression. The mould has columns 5 at its corners, and the block 6 in which the injection is performed is supported by a plate 7.

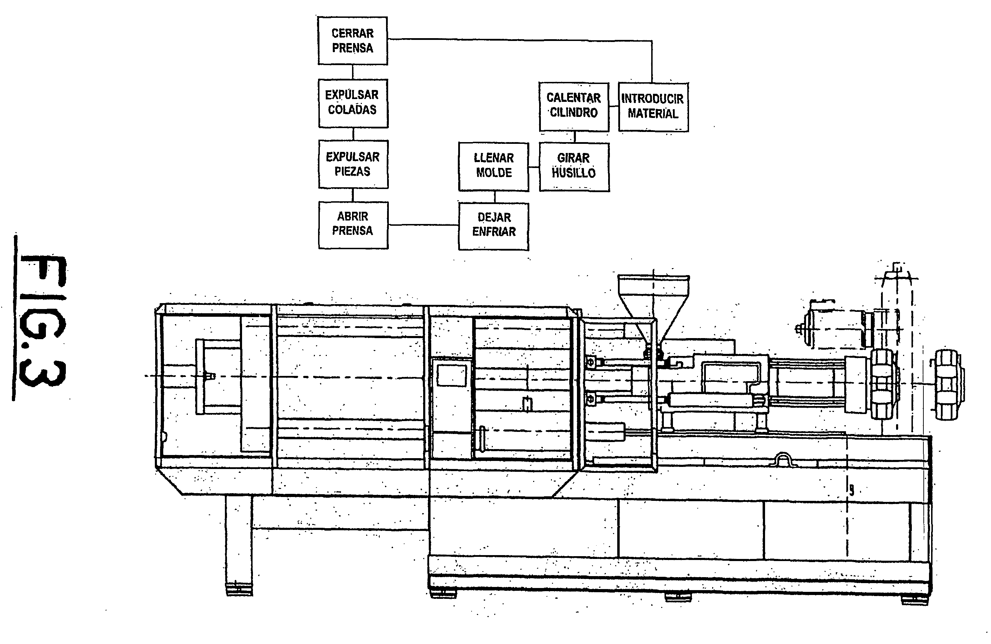

According to a second aspect of the present invention, with reference to Figure 3, the invention relates to the method of injection moulding for producing the described piece, which is carried out in a Model 60 SANDRETTO SEVEN SERIES injection press without rollers using moulds as shown in Figure 2, using a thermoplastic material, in particular, a homopolymer with a polypropylene load and rubber, preferably EVOPRENE®, more preferably SANTOPRENE®, with a hardness preferably of 35 Shore A method that consists of the following stages:
- closing the press of the injection machine with a force of 49 x 10⁴ N
- introducing the thermoplastic material into the screw device in the form of pellets through a respective feed hopper at a rate of 25 g of load per cycle,
- heating the cylinder of the screw device to approximately 230° C to produce the fusion of the introduced material,
- rotating the screw device a 20% of its run at a high velocity of 300 rpm, with a low counter pressure of 5 bar, to perform the introduction of the material into the press of the injection machine until filling the corresponding moulds with a flow of 180 cm³/sec, the load of each impression or cavity being 1.5 g, thus attaining with these parameters a minimum mixing level with a high shearing degree,
- leaving the material introduced into the press to cool for 7 sec, as a result of the cooling action of the water circulating through the interior of the press which enters at temperature of 8° C and leaves at a temperature of 14° C (circulating in a closed circuit), with a flow rate of 38 L/hour,
- opening the press and subsequently the moulds of its interior, and actuating both some impeller means, like mobile male pieces that emerge from the bottom of the impression until exposing the piece outside the level of the mould, as the ejectors, which incorporate a rotating roller at one end, in the form of a cylindrical brush with an axis of revolution parallel to the plate to "carry down" the pieces from the aforementioned mobile male pieces outside the press, given that the non-slipping character of the pieces prevents them from being carried down by conventional ejectors, until the pieces fall by gravity into a corresponding collection hopper, and
- expelling the cold casting pieces.

Total cycle time was 15 sec.

The method described above was completed with the application of a layer of adherent material to the smooth face of the piece, specifically, adhesive marketed by Scotch with the commercial reference 9472-LE, and a detachable protective lamina.

It is not considered necessary to extend the content of this description in order that an expert in the art understand the scope and the advantages derived from the invention, as well as to develop and put into practice the object thereof.

Nevertheless, it must be understood that the invention has been described according to a preferred embodiment thereof, and so it may be modified without this supposing an alteration to the scope of said invention, such modifications being possible, in particular, in the shape and size of the piece, and even in the materials used in its manufacture, and also in the features of the mould and the number of positions foreseen therein, as well as slight adjustments to the parameters for combining the material used with materials of desired coloration.

## Claims

1. Non-slipping piece (1) of thermoplastic elastomer (TPE) (1), usable as a label, publicity support or similar, **characterised in that** the aforementioned piece (1) consists of a flat body, with an approximately rectangular base, with a bevelled edge (4), body that has a larger smooth face and a smaller opposite face having a raised perimeter border (2), of constant thickness, that defines a central surface zone (3) lowered with respect to the upper part of the raised perimeter border (2).

2. Non-slipping piece (1) according to claim 1, **characterised in that** the raised perimeter border (2) is subdivided into a series of independent elevations (2').

3. Non-slipping piece (1) according to claim 2, **characterised in that** the central surface (3) is at the same level as the base of the elevations (2').

4. Non-slipping piece (1) according to claim 1, **characterised in that** the thermoplastic elastomer (TPE) material has a hardness of 35 Shore A.

5. Non-slipping piece (1) according to any one of the previous claims, **characterised in that** the application surface of the piece is of at least 30% with respect to the total surface of the base of the piece.

6. Non-slipping piece (1) according to claim 5, **characterised in that** the application surface of the piece is 35% with respect to the total surface of the base of the piece

7. Non-slipping piece (1) according to any one of the previous claims, **characterised in that** the thickness of the piece is between 1.mm. and 1.5 mm.

8. Non-slipping piece (1) according to claim 7, **characterised in that** the thickness of the piece is 1.4 mm.

9. A method for producing a non-slipping piece (1) of thermoplastic elastomer (TPE), according to what is claimed in the previous claims, **characterised in that** it is carried out by means of submarine gate molding, without using the roller, and includes the stages of:
- closing the injection machine press with a force between 45 x 10⁴ N and 55 x 10⁴ N,
- introducing the thermoplastic material into the screw device in the form of pellets through a respective feed hopper at a rate between 24 g and 26 g of load per cycle, with the desired coloration material,
- heating the cylinder of the screw device between 180 and 230° C to produce the fusion of the introduced material,
- rotating the screw device at a high rate between 280rpm and 330 rpm, with a low counter-pressure between 0 bar and 20 bars, to perform the introduction of the material into the press of the injection machine at a flow rate between 170 cm³/sec and 190 cm³/sec until filling up the corresponding moulds with a load between 1.3 g/impression (or cavity) and 1.6 g/impression (or cavity),
- leaving the material introduced into the press to cool between 6 and 9 sec, and as a result of the cooling action of the fluid circulating through the interior of the press between 6ºC and 10ºC, with a flow rate between 30 L/hour and 40 L/hour,
- opening the press and subsequently the moulds in its interior, and actuating the ejectors in combination with impeller means in the base of the impression (or cavity) to carry down the pieces by gravity to a corresponding collection hopper, and
- expelling the cold casting pieces.

10. Method for producing a non-slipping piece (1) of thermoplastic elastomer (TPE), according to claim 9, **characterised in that** each impression (or cavity) of the mould is filled with 1.5 g of load.

11. Method for producing a non-slipping piece (1) of thermoplastic elastomer (TPE), according to any one of claims 9 or 10, **characterised in that** the force of closure of the press is 49 x 10⁴ N.

12. Method for producing a non-slipping piece (1) of thermoplastic elastomer (TPE), according to any of claims 9 to 11, **characterised in that** the introduction of material into the feed hopper is carried out at a rate of 25 g of load per cycle.

13. Method for producing a non-slipping piece (1) of thermoplastic elastomer (TPE), according to any of claims 9 to 12, **characterised in that** the cylinder is heated to 230º C.

14. Method for producing a non-slipping piece (1) of thermoplastic elastomer (TPE), according to any of claims 9 to 13, **characterised in that** the screw device is made to rotate at a high rate of 300 rpm.

15. Method for producing a non-slipping piece (1) of thermoplastic elastomer (TPE), according to any of claims 9 to 14, **characterised in that** the screw device is made to rotate with a low counter-pressure of 5 bar.

16. Method for producing a non-slipping piece (1) of thermoplastic elastomer (TPE), according to any of claims 9 to 15, **characterised in that** the injection rate is 160 cm³/sec.

17. Method for producing a non-slipping piece (1) of thermoplastic elastomer (TPE), according to any of claims 9 to 16, **characterised in that** the material introduced in the press is left to cool for 7 seconds.

18. Method for producing a non-slipping piece (1) of thermoplastic elastomer (TPE), according to any of claims 9 to 17, **characterised in that** the cooling fluid is water that circulates around the interior of the press with an inlet temperature of 8º C and an outlet temperature of 14º C.

19. Method for producing a non-slipping piece (1) of thermoplastic elastomer (TPE), according to any of claims 9 to 18, **characterised in that** cooling water circulates around the interior of the press at a flow rate of 38 L/hour.

20. Method for producing a non-slipping piece (1) of thermoplastic elastomer (TPE), according to any of claims 9 to 19, **characterised in that** it is carried out with cold castings.

21. Method for producing a non-slipping piece (1) of thermoplastic elastomer (TPE), according to any of claims 9 to 20, **characterised in that** on opening the press, and as a result the moulds of its interior, some impeller means are actuated, consisting of male mobile pieces that emerge from the bottom of the impression (or cavity) until exposing the piece beyond the level of the mould.

22. Method for producing a non-slipping piece (1) of thermoplastic elastomer (TPE), according to any of claims 9 to 21, **characterised in that** on opening the press, and as a result the moulds of its interior, some ejection means are actuated which incorporate a rotating roller at their end consisting of a cylindrical brush with an axis of revolution parallel to the plate, to "carry down" the pieces until they fall by gravity into the corresponding collection hopper.

23. Method for producing a non-slipping piece (1) of thermoplastic elastomer (TPE), according to any of claims 9 to 22, **characterised in that** the total cycle time is 15 seconds.

24. Method for producing a non-slipping piece (1) of thermoplastic elastomer (TPE), according to claims 9, 14, 15 or 16, **characterised in that** the combination of the parameters of rate of rotation of the screw, the counter-pressure of the screw and the rate of injection lead to a low mixing level and a high shearing level.

25. Method for producing a non-slipping piece (1) of thermoplastic elastomer (TPE), according to any of claims 9 to 24, **characterised in that** there is an additional stage of incorporating a layer of material adherent to the smooth surface of the produced piece, and a detachable sheet of coating over said lamina.

26. Method for producing a non-slipping piece (1) of thermoplastic elastomer (TPE), according to any one of claims 10 to 25, **characterised in that** there is an additional stage of incorporating of a double-layer adherent lamina to the smooth surface of the piece produced, and a detachable sheet of coating over said lamina.

## Patentansprüche

1. Gleitsicheres Teil (1) aus thermoplastischem Elastomer (1) (TPE), verwendbar als Schild, Werbeträger oder Ähnliches, **dadurch gekennzeichnet, dass** das genannte Teil (1) aus einem flachen Körper besteht, mit einer etwa rechteckigen Grundfläche und einem abschrägten Rand (4), wobei dieser Körper eine größere glatte Seite und eine kleinere gegenüberliegende Seite aufweist, wobei die Letztere einen erhabenen umlaufenden Rand (2) mit gleichmäßiger Dicke aufweist, der einen zentralen Oberflächenbereich (3) abgrenzt, der bezüglich des oberen Teiles des erhabenen umlaufenden Randes (2) tiefer liegt.

2. Gleitsicheres Teil (1) nach Anspruch 1, **dadurch gekennzeichnet, dass** der erhabene umlaufende Rand (2) in einer Reihe unabhängiger Erhebungen (2') unterteilt ist.

3. Gleitsicheres Teil (1) nach Anspruch 2, **dadurch gekennzeichnet, dass** die zentrale Oberfläche (3) sich auf der gleichen Ebene wie die Grundfläche der Erhebungen (2') befindet.

4. Gleitsicheres Teil (1) nach Anspruch 1, **dadurch gekennzeichnet, dass** das thermoplastische elastomere Material (TPE) eine Härte von 35 Shore A hat.

5. Gleitsicheres Teil (1) nach einem beliebigen der vorhergehenden Ansprüche, **dadurch gekennzeichnet, dass** die Anwendungsfläche des Teiles mindestens 30% bezogen auf der Gesamtfläche der Grundfläche des Teiles beträgt.

6. Gleitsicheres Teil (1) nach Anspruch 5, **dadurch gekennzeichnet, dass** die Anwendungsfläche des Teiles 35% bezogen auf der Gesamtfläche der Grundfläche des Teiles beträgt.

7. Gleitsicheres Teil (1) nach einem beliebigen der vorhergehenden Ansprüche, **dadurch gekennzeichnet, dass** die Dicke des Teiles zwischen 1 mm und 1,5 mm liegt.

8. Gleitsicheres Teil (1) nach Anspruch 7, **dadurch gekennzeichnet, dass** die Dicke des Teiles 1,4 mm beträgt.

9. Verfahren zur Herstellung eines gleitsicheren Teiles (1) aus thermoplastischem Elastomer (TPE) nach den vorhergehenden Ansprüchen, **dadurch gekennzeichnet, dass** sie mittels Formen durch Tunnelanschnitt ohne Verwendung der Walze durchgeführt wird und mit den Schritten
- Schließen der Presse der Spritzmaschine mit einer Kraft von 45 x 10⁴ N bis 55 x 10⁴ N,
- Einführung des thermoplastischen Materials in der Spindelvorrichtung in Form von Pellets durch einen entsprechenden Zuführtrichter mit einer Geschwindigkeit von 24 g bis 26 g Ladung pro Zyklus, mit dem gewünschten Farbstoff,
- Aufheizen des Zylinders der Spindelvorrichtung auf zwischen 180 und 230ºC, um das Aufschmelzen des eingeführten Materials zu bewirken,
- Drehen der Spindelvorrichtung mit einer hohen Geschwindigkeit zwischen 280 U/min und 330 U/min und einem niedrigen Gegendruck zwischen 0 bar und 20 bar, um die Einführung des Materials in der Presse der Spritzmaschine mit einem Volumenstrom zwischen 170 cm³/Sek und 190 cm³/Sek durchzuführen, bis die jeweiligen Formen mit einer Ladung zwischen 1,3 g/Abdruck (oder Vertiefung) und 1,6 g/Abdruck (oder Vertiefung) aufgefüllt sind,
- Abkühlung des in der Presse eingeführten Materials zwischen 6 und 9 Sek und als Folge der Kühlwirkung des im Inneren der Presse fließenden Fluids zwischen 6ºC und 10ºC, mit einem Volumenstrom zwischen 30 L/Stunde und 40 L/Stunde,
- Öffnen der Presse und anschließend der Formen in ihrem Inneren und Antreiben der Auswerfer in Verbindung mit Antriebsmitteln in der Grundfläche des Abdruckes (oder der Vertiefung), um die Teile durch die Schwerkraft bis zu einem entsprechenden Sammeltrichter mitzureißen, und
- Auswerfen der kühlen Gussstücke.

10. Verfahren zur Herstellung eines gleitsicheren Teiles (1) aus thermoplastischem Elastomer (TPE) nach Anspruch 9, **dadurch gekennzeichnet, dass** jeder Abdruck (oder jede Vertiefung) der Form mit einer Ladung von 1,5 g gefüllt ist.

11. Verfahren zur Herstellung eines gleitsicheren Teiles (1) aus thermoplastischem Elastomer (TPE) , nach einem beliebigen der Ansprüche 9 oder 10, **dadurch gekennzeichnet, dass** die Schließkraft der Presse 49 x 10⁴ N beträgt.

12. Verfahren zur Herstellung eines gleitsicheren Teiles (1) aus thermoplastischem Elastomer (TPE), nach irgendeinem der Ansprüche 9 bis 11, **dadurch gekennzeichnet, dass** die Einführung des Materials im Zuführtrichter bei einer Geschwindigkeit von 25 g Ladung pro Zyklus erfolgt.

13. Verfahren zur Herstellung eines gleitsicheren Teiles (1) aus thermoplastischem Elastomer (TPE), nach irgendeinem der Ansprüche 9 bis 12, **dadurch gekennzeichnet, dass** das Zylinder auf 230ºC geheizt wird.

14. Verfahren zur Herstellung eines gleitsicheren Teiles (1) aus thermoplastischem Elastomer (TPE), nach irgendeinem der Ansprüche 9 bis 13, **dadurch gekennzeichnet, dass** die Spindelvorrichtung bei einer hohen Geschwindigkeit von 300 U/min gedreht wird.

15. Methode zur Herstellung eines gleitsicheren Teiles (1) aus thermoplastischem Elastomer (TPE), nach irgendeinem der Ansprüche 9 bis 14, **dadurch gekennzeichnet, dass** die Spindelvorrichtung mit einem niedrigen Gegendruck von 5 bar gedreht wird.

16. Verfahren zur Herstellung eines gleitsicheren Teiles (1) aus thermoplastischem Elastomer (TPE), nach irgendeinem der Ansprüche 9 bis 15, **dadurch gekennzeichnet, dass** die Einspritzgeschwindigkeit 160 cm³/Sek beträgt.

17. Verfahren zur Herstellung eines gleitsicheren Teiles (1) aus thermoplastischem Elastomer (TPE), nach irgendeinem der Ansprüche 9 bis 16, **dadurch gekennzeichnet, dass** das in der Presse eingeführte Material 7 Sekunden lang abgekühlt wird.

18. Verfahren zur Herstellung eines gleitsicheren Teiles (1) aus thermoplastischem Elastomer (TPE), nach irgendeinem der Ansprüche 9 bis 17, **dadurch gekennzeichnet, dass** das Kühlfluid Wasser ist, das durch das Innere der Presse mit einer Eingangstemperatur von 8ºC und einer Ausgangstemperatur von 14ºC fließt.

19. Verfahren zur Herstellung eines gleitsicheren Teiles (1) aus thermoplastischem Elastomer (TPE), nach irgendeinem der Ansprüche 9 bis 18, **dadurch gekennzeichnet, dass** das Kühlwasser durch das Innere der Presse mit einem Volumenstrom von 38 L/Stunde fließt.

20. Verfahren zur Herstellung eines gleitsicheren Teiles (1) aus thermoplastischem Elastomer (TPE), nach irgendeinem der Ansprüche 9 bis 19, **dadurch gekennzeichnet, dass** sie mit Kaltgüsse durchgeführt wird.

21. Verfahren zur Herstellung eines gleitsicheren Teiles (1) aus thermoplastischem Elastomer (TPE), nach irgendeinem der Ansprüche 9 bis 20, **dadurch gekennzeichnet, dass** beim Öffnen der Presse und infolgedessen der Formen in ihrem Inneren einige Antriebsmitteln angetrieben werden, die aus beweglichen Stiften bestehen, die aus dem Boden des Abdruckes (oder der Vertiefung) heraustreten bis das Teil über den Rand der Form hinaustritt.

22. Verfahren zur Herstellung eines gleitsicheren Teiles (1) aus thermoplastischem Elastomer (TPE), nach irgendeinem der Ansprüche 9 bis 21, **dadurch gekennzeichnet, dass** beim Öffnen der Presse und infolgedessen der Formen in ihrem Innern einige Ausstossmitteln betätigt werden, an dessen Ende eine rotierende Walze eingebaut ist, die aus einer zylindrischen Bürste mit einer zur Platte parallelen Drehachse besteht, um die Teile "mitzureißen" bis sie durch die Schwerkraft in einem entsprechenden Sammeltrichter fallen.

23. Verfahren zur Herstellung eines gleitsicheren Teiles (1) aus thermoplastischem Elastomer (TPE), nach irgendeinem der Ansprüche 9 bis 22, **dadurch gekennzeichnet, dass** die Gesamtdauer des Zyklus 15 Sekunden beträgt.

24. Verfahren zur Herstellung eines gleitsicheren Teiles (1) aus thermoplastischem Elastomer (TPE), nach den Ansprüchen 9, 14, 15 oder 16, **dadurch gekennzeichnet, dass** die Kombination der Parameter Drehgeschwindigkeit der Spindel, Gegendruck der Spindel und Einspritzgeschwindigkeit einen niedrigen Mischungsgrad und einen hohen Schergrad ergeben.

25. Verfahren zur Herstellung eines gleitsicheren Teiles (1) aus thermoplastischem Elastomer (TPE), nach irgendeinem der Ansprüche 9 bis 24, **dadurch gekennzeichnet, dass** ein zusätzlicher Schritt zum Hinzufügen einer Schicht aus haftendem Material zur glatten Oberfläche des hergestellten Teiles und einer abnehmbaren Überzugsfolie auf der besagten Folie vorliegt.

26. Verfahren zur Herstellung eines gleitsicheren Teiles (1) aus thermoplastischem Elastomer (TPE), nach irgendeinem der Ansprüche 10 bis 25, **dadurch gekennzeichnet, dass** ein zusätzlicher Schritt zum Hinzufügen einer haftenden doppelschichtigen Folie zur glatten Oberfläche des hergestellten Teiles und einer abnehmbaren Überzugsfolie auf der besagten Folie vorliegt.

## Revendications

1. Pièce (1) anti-glissante en élastomère (1) thermoplastique (TPE), utilisable comme une étiquette, support publicitaire ou similaire, **caractérisée en ce que** ladite pièce (1) consiste en un corps aplati, approximativement rectangulaire en plan, avec le bord (4) biseauté, corps présentant une face lisse plus grande et une face opposée plus petite présentant une bande (2) périmétrale élevée, à épaisseur constante, qui délimite une zone (3) superficielle centrale surbaissée par rapport à la partie supérieure de la bande (2) périmétrale élevée.

2. Pièce (1) anti-glissante selon la revendication 1, **caractérisée en ce que** la bande (2) périmétrale élevée est sous-divisée en une série d'élévations (2') indépendantes.

3. Pièce (1) anti-glissante selon la revendication 2, **caractérisée en ce que** la surface (3) centrale est au même niveau que la base des élévations (2').

4. Pièce (1) anti-glissante selon la revendication 1, **caractérisée en ce que** la matière élastomère thermoplastique (TPE) a une dureté de 35 Shore A.

5. Pièce (1) anti-glissante selon une quelconque des revendications précédentes, **caractérisée en ce que** la surface d'application de la pièce est d'au moins 30% par rapport à la surface totale de la base de la pièce.

6. Pièce (1) anti-glissante selon la revendication 5, **caractérisée en ce que** la surface d'application de la pièce est de 35% par rapport à la surface totale de la base de la pièce.

7. Pièce (1) anti-glissante selon une quelconque des revendications précédentes, **caractérisée en ce que** l'épaisseur de la pièce est entre 1 mm et 1,5 mm.

8. Pièce (1) anti-glissante selon la revendication 5, **caractérisée en ce que** l'épaisseur de la pièce est de 1,4 mm.

9. Procédé pour produire une pièce (1) anti-glissante d'élastomère thermoplastique (TPE), selon les revendications précédentes, **caractérisé en ce qu'**il est réalisé au moyen de moulage d'entrée sous-marine, sans utilisation du rouleau, et il inclut les étapes de:
- fermer la presse de la machine d'injection avec une force entre 45 x 10⁴ N et 55 x 10⁴ N,
- introduire dans le dispositif à broche la matière thermoplastique sous forme de granules par une trémie d'alimentation correspondante à une vitesse entre 24 g et 26 g de charge par cycle, avec la matière de coloration souhaitée,
- réchauffer le cylindre du dispositif à broche entre 180 et 230ºC pour introduire la fonte de la matière introduite,
- faire tourner le dispositif à broche à une grande vitesse entre 280 rpm et 330 rpm, avec une contre-pression faible entre 0 bars et 20 bars, pour effectuer l'introduction de la matière dans la presse de la machine d'injection avec un débit entre 170 cm³/s et 190 cm³/s jusqu'à remplir les moules correspondants avec une charge entre 1,3 g/empreinte (ou cavité) et 1,6 g/empreinte (ou cavité),
- laisser que la matière introduite dans la presse se refroidisse entre 6 y 9 s, et comme résultat de l'action de refroidissement du fluide circulant à l'intérieur de la presse entre 6ºC et 10ºC, avec un débit entre 30 1/heure et 40 1/heure,
- ouvrir la presse et par la suite les moules de son intérieur, et actionner les éjecteurs en combinaison avec des moyens poussoirs sur la base de l'empreinte (ou cavité) pour entraîner les pièces par gravité jusqu'à une trémie de réception correspondante, et
- expulser les pièces coulées froides.

10. Procédé pour produire une pièce (1) anti-glissante en élastomère thermoplastique (TPE), selon la revendication 9, **caractérisé en ce que** chaque empreinte (ou cavité) du moule est remplie avec 1,5 g de charge.

11. Procédé pour produire une pièce (1) anti-glissante en élastomère thermoplastique (TPE), selon une quelconque des revendications 9 ou 10, **caractérisé en ce que** la force de fermeture de la presse est de 49 x 10⁴ N.

12. Procédé pour produire une pièce (1) anti-glissante en élastomère thermoplastique (TPE), selon quelconque des revendications 9 à 11, **caractérisé en ce que** l'introduction de matière dans la trémie d'alimentation est réalisée à une vitesse de 25 g de charge par cycle.

13. Procédé pour produire une pièce (1) anti-glissante en élastomère thermoplastique (TPE), selon quelconque des revendications 9 à 12, **caractérisé en ce que** le cylindre est réchauffé à 230ºC.

14. Procédé pour produire une pièce (1) anti-glissante en élastomère thermoplastique (TPE), selon quelconque des revendications 9 à 13, **caractérisé en ce que** le dispositif à broche tourne à une grande vitesse de 300 rpm.

15. Procédé pour produire une pièce (1) anti-glissante en élastomère thermoplastique (TPE), selon quelconque des revendications 9 à 14, **caractérisé en ce que** le dispositif à broche tourne avec une faible contre-pression de 5 bars.

16. Procédé pour produire une pièce (1) anti-glissante en élastomère thermoplastique (TPE), selon une quelconque des revendications 9 à 15, **caractérisé en ce que** la vitesse d'injection est de 160 cm³/s.

17. Procédé pour produire une pièce (1) anti-glissante en élastomère thermoplastique (TPE), selon quelconque des revendications 9 à 16, **caractérisé en ce que** la matière introduite dans la presse se laisse refroidir pendant 7 secondes.

18. Procédé pour produire une pièce (1) anti-glissante en élastomère thermoplastique (TPE), selon quelconque des revendications 9 à 17, **caractérisé en ce que** le fluide de refroidissement est de l'eau qui circule à l'intérieur de la presse avec une température d'entrée de 8ºC et une température de sortie de 14ºC.

19. Procédé pour produire une pièce (1) anti-glissante en élastomère thermoplastique (TPE), selon quelconque des revendications 9 à 18, **caractérisé en ce que** l'eau de refroidissement circule à l'intérieur de la presse avec un débit de 38 l/heure.

20. Procédé pour produire une pièce (1) anti-glissante en élastomère thermoplastique (TPE), selon quelconque des revendications 9 à 19, **caractérisé en ce qu'**il est réalisé avec des coulages à froid.

21. Procédé pour produire une pièce (1) anti-glissante en élastomère thermoplastique (TPE), selon quelconque des revendications 9 à 20, **caractérisé en ce que** lors de l'ouverture de la presse, et par conséquent des moules se trouvant en son sein, des moyens poussoirs sont actionnés, consistant à des noyaux mobiles qui émergent du fond de l'empreinte (ou cavité) jusqu'à exposer la pièce au-delà du niveau du moule.

22. Procédé pour produire une pièce (1) anti-glissante en élastomère thermoplastique (TPE), selon quelconque des revendications 9 à 21, **caractérisé en ce que** lors de l'ouverture de la presse, et par conséquent des moules se trouvant en son sein, quelques moyens éjecteurs son actionnés qui incorporent à leur extrémité un rouleau rotatif consistant à une brosse cylindrique avec un axe de révolution parallèle au plateau, pour "entraîner" les pièces jusqu'à les faire tomber par gravité dans une trémie de réception correspondante.

23. Procédé pour produire une pièce (1) anti-glissante en élastomère thermoplastique (TPE), selon quelconque des revendications 9 à 22, **caractérisé en ce que** le temps total du cycle est de 15 secondes.

24. Procédé pour produire une pièce (1) anti-glissante en élastomère thermoplastique (TPE), selon les revendications 9, 14, 15 ou 16, **caractérisé en ce que** la combinaison des paramètres de vitesse de rotation de la broche, la contre-pression de la broche et la vitesse d'injection produisent un faible niveau de mélange et un haut niveau de coupe.

25. Procédé pour produire une pièce (1) anti-glissante en élastomère thermoplastique (TPE), selon quelconque des revendications 9 à 24, **caractérisé en ce qu'**il y a une étape additionnelle d'incorporation d'une couche de matière adhérente à la surface lisse de la pièce produite, et d'une feuille amovible de recouvrement sur ladite lame.

26. Procédé pour produire une pièce (1) anti-glissante en élastomère thermoplastique (TPE), selon une quelconque des revendications 9 à 25, **caractérisé en ce qu** il y a une étape additionnelle d'incorporation d'une lame adhérente double couche à la surface lisse de la pièce produite, et d'une feuille amovible de recouvrement sur ladite lame.
